# EUROPEAN PATENT APPLICATION

(11) **EP 1 646 229 A2**
(43) Date of publication of application: **12.04.2006**
(21) Application number: 05077608.7
(22) Date of filing: 18.06.1999
(51) Int. Cl.: H04N 5/445, H04N 5/45

(54) **Web browser system for displaying recently viewed television channels**

(30) Priority: 29.06.1998 US 107083
(62) Divisional of application: 99930427.2
(71) Applicant: MICROSOFT CORPORATION, Redmond, Washington 98052-6399 (US)
(72) Inventor: White, Christopher M., San Francisco, CA 94115 (US)
(74) Representative: Wright, Howard Hugh Burnby

(57) **Abstract**

A system and method provides a way to display images of recently viewed television channels for the user's convenience. Multiple recently accessed television channels are stored in a list. Selecting channels in predefined ways causes the channels to be added to the list in an order in which they were accessed. Small screen images corresponding to a number of recently viewed television channels are displayed in a "recent channel" display screen. The small screen image for the channel being currently viewed is active and displays a live broadcast image, while the remaining small screen images display still images. A focus identifies the screen image of the currently active channel. The focus can be moved among the other small screen images within the recent channel display screen, wherein the channel corresponding to the currently focused image becoming the active channel.

## Description

### TECHNICAL FIELD

The present invention relates to web browsers, and more particularly to a method of displaying images of recently viewed television channels.

### BACKGROUND OF THE INVENTION

Traditional means of home access to the Internet and the World Wide Web (Web) involve use of personal computers or dedicated Network Computers (NC's). The Web is a collection of formatted hypertext pages located on numerous computers around the world that are logically connected by the Internet. Recent advances in network technology have enabled access to the Internet and the Web through a standard television set as an alternative to the personal computer. In these systems, the television is basically used as a display device for a network interface set-top box, which provides access to web pages and content available on the Web.

Network interface systems which combine a television tuner and standard network interface devices allow a user to simultaneously view both broadcast or television programs as well as web programming. Certain systems display the television program content as an image or window within a web page. Although it is possible to change the television controls, such as channel and volume, through familiar methods (e.g., panel knobs or remote control), access to television programs in integrated television/web systems can benefit from improved methods. For example, when scanning or "surfing" the television to select a particular program or channel to watch, a user typically selects or "flips" through several channels sequentially and views each one for a couple of seconds or so before moving on. If there are two or three programs that a user is interested in, the user must flip between channels by entering the channel number or flipping through intermediate channels. This is often a time consuming process that requires the user to remember particular channel numbers or consult a TV program listing or guide.

Based on the foregoing, it is desirable to provide a television receiver system that displays a number of most recently viewed television channels so that a previously viewed channel can easily be re-selected for viewing.

It is further desirable to provide a television receiver system that displays the graphical content of recently viewed television channels so that a user is readily reminded of what was viewed on a particular channel.

It is yet further desirable to provide a television receiver system that displays updated graphical content of recently viewed television channels so that a user knows what is presently being shown on previously accessed channels.

### SUMMARY OF THE INVENTION

The present invention concerns a system and method for displaying images of recently viewed television channels on a television. Multiple recently accessed television channels are stored in a local database. Small screen images corresponding to these channels are displayed on a single display screen, referred to as the "recent channel" display screen. A cursor control device is used to select one of the small screens to make the channel corresponding to the selected screen an active screen. In one implementation, a web browser program presents the recent channel display screen, and the active screen is selected from among the plurality of recently accessed channels through direction controls on a remote control device.

A live television broadcast signal is displayed in the active screen and still images corresponding to the last images viewed on the other recently viewed television channels are displayed in the remaining small screen images. The active screen may be expanded into a full size image displayed on the display device to allow a more comfortable viewing of the active program.

### BRIEF DESCRIPTION OF THE DRAWINGS

Fig. 1 illustrates a system having multiple clients connected to a Web server system, which in turn is connected via the Internet to multiple remote servers.
Fig. 2 illustrates a client system.
Fig. 3 illustrates a remote control unit employed in the client system.
Fig. 4 is a block diagram of an electronics unit employed in the client system to implement a Web browser program.
Fig. 5 is a block diagram of the software/hardware architecture of the client system.
Fig. 6 is a block diagram of software/hardware components in the electronics unit illustrated of Fig. 4.
Fig. 7 illustrates a Television Home Page of the Web browser program.
Fig. 8 illustrates a Recent display screen of the Web browser program.
Fig. 9 is a flowchart illustrating steps in a method for storing and displaying recently viewed television channels.

### DETAILED DESCRIPTION OF THE PREFERRED EMBODIMENT

The present invention includes various steps, which are described below. The steps can be embodied in machine-executable instructions, which can be used to cause a general-purpose or special-purpose processor programmed with the instructions to perform the steps. Alternatively, the steps of the present invention might be performed by specific hardware components that contain hardwired logic for performing the steps, or by any combination of programmed computer components and custom hardware components.

While the invention is described in the context of viewing Web content on an Internet terminal system, such as the WebTV® Internet terminal, the method and apparatus described herein are equally applicable to other types of content that may be stored remotely or content that may be directly accessible to the viewing system (WebTV is a registered trademark of WebTV Networks, Inc. of Palo Alto, California). For example, logical addresses embedded in a video signal may refer to content stored on a CD-ROM or other mass storage device, a company's Intranet server, or other resource. Additionally, certain aspects of the invention described herein have equal application to various other TV viewing devices, such as personal computers equipped with TV tuners, and the like. Moreover, while various implementations are described with reference to an NTSC broadcast video signal, aspects of the present invention are equally applicable to other broadcast TV systems, such as Phase Alternate Lines (PAL), Sequential Couleur Avec Memoire (SECAM), and the proposed High Definition Television (HDTV) standard. Finally, it is appreciated that a variety of other transport mechanisms may be employed, including digital satellite, digital TV, and cable TV.

### System Overview

Aspects of the present invention may be included in an Internet system terminal, such as the WebTV Internet terminal, for providing a user with access to the Internet. As will be discussed further below, the Internet system includes an Internet terminal (also referred to as an Internet System client or "client") and an Internet server ("server"). A user of an Internet terminal generally accesses a server via a direct-dial telephone (POTS, for "plain old telephone service"), ISDN (Integrated Services Digital Network), or other similar connection, in order to browse the Web, send and receive email, and use various other Internet system network services. Services provided by the Internet system network service, such as the WebTV network, are typically provided by servers using software residing within the servers in conjunction with software residing within a client.

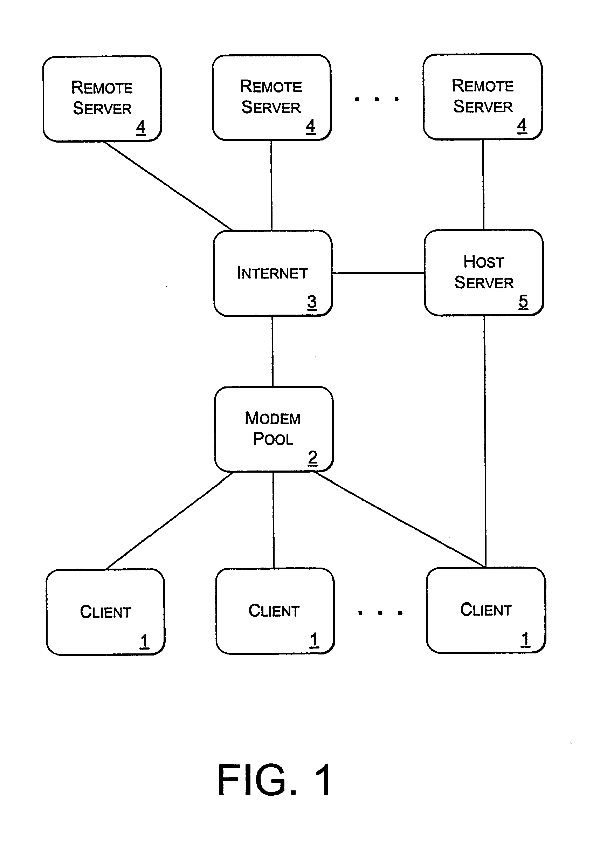

Fig. 1 illustrates a basic configuration of an Internet system network in which one embodiment of the present invention may be implemented. A number of clients 1 are coupled to a modem pool 2 via direct-dial, bi-directional data connections 29, which may be telephone (POTS, i.e., "plain old telephone service"), ISDN (Integrated Services Digital Network), or any other similar type of connection. Other connection mechanisms may be employed such as cable and satellite forward channels, for example. In any event, the modem pool 2 is coupled typically through a router, such as that conventionally known in the art, to a number of remote servers 4 via a conventional network infrastructure 3, such as the Internet. The Internet system also includes a server 5, which specifically supports the clients 1. The clients 1 each have a connection to the server 5 through the modem pool 2 and the Internet 3. Note that the modem pool 2 is a conventional modem pool, such as those found today throughout the world providing access to the Internet and private networks.

### Exemplary Client System

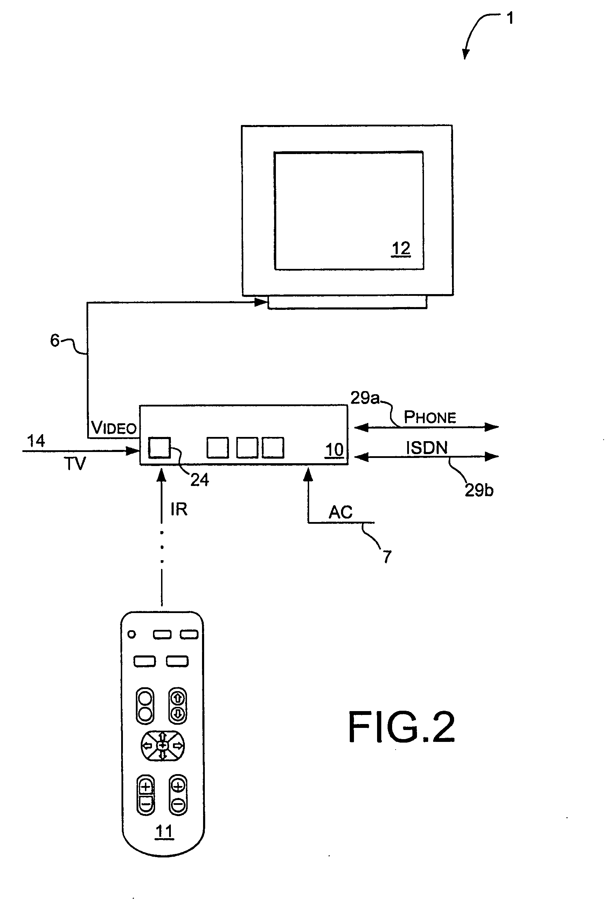

Fig. 2 illustrates an Internet system client ("client") 1 known in the art. The client 1 includes an electronics unit 10 implemented as a set-top box (STB), an ordinary television set 12, and a remote control 11. In the illustrated implementation, the client 1 uses the television set 12 as a display device for displaying video data and a graphical user interface. The set-top box 10 is coupled to the television set 12 by a video link 6. The video link 6 is an RF (radio frequency), S-video, composite video, or other equivalent form of video link. Although the electronics unit is shown separately from the television set, the electronic unit 10 may alternatively be built into the television set 12 as an integral unit.

The set-top box 10 includes hardware and/or software for receiving and decoding a broadcast video signal 8, such as an NTSC, PAL, SECAM or other TV system video signal, and providing video data to the television set via video link 6. The set-top box 10 also includes hardware and/or software for providing the user with a graphical user interface, by which the user can access various Internet system network services, browse the Web, send email, and otherwise access the Internet. The user interface includes means for notifying the user of the presence of encoded data, such as URLs, embedded in the video signal. The notification may be audible, visual or a combination of the two. In one implementation, the notification comprises temporarily displaying an icon in a portion of the screen.

The client 1 may include both a standard modem and an ISDN modem, such that the communication link 29 between the set-top box 10 and the server 5 can be either a telephone (POTS) connection 29a or an ISDN connection 29b. The set-top box 10 receives power through a power line 7.

The user operates the remote control 11 to control the client 1 in browsing the Web, sending email, and performing other Internet-related functions. The set-top box 10 receives commands from remote control 11 via an infrared (IR) communication link. In alternative embodiments, the link between the remote control 11 and the set-top box 10 may be RF or any equivalent mode of transmission.

### Exemplary Client System Architecture

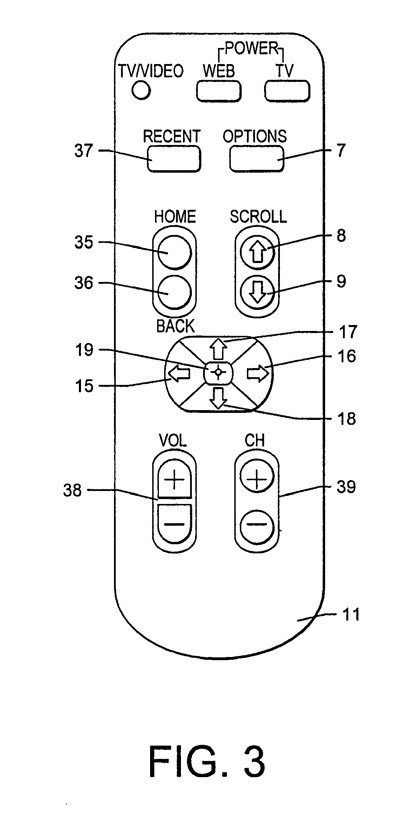

Fig. 3 shows remote control 11 in greater detail. In this illustration, remote control 11 is configured similarly to common hand-held remote units used to control television sets. In other exemplary implementations, remote control 11 may be a wired handheld controller or a wired or wireless (e.g., IR) keyboard or any other similar device. Remote control 11 includes an "Options" button 7, "Scroll up" button 8, "Scroll down" button 9, direction buttons 15-18, enter (or Go) button 19, "Home" button 35, "Back" button 36, and "Recent" button 37. Direction buttons 15-18 include left button 15, right button 16, up button 17, and down button 18.

These buttons allow a user to control movement of a cursor on the display device 12. The enter button 19 causes the STB 10 to execute a highlighted command or access a currently selected hypertext link. Remote control 11 also includes volume control buttons (VOL +/-) 38 to control the volume of audio content from television programs or web pages, and channel control buttons (CH +/-) 39 which allow a user to sequentially select television channels.

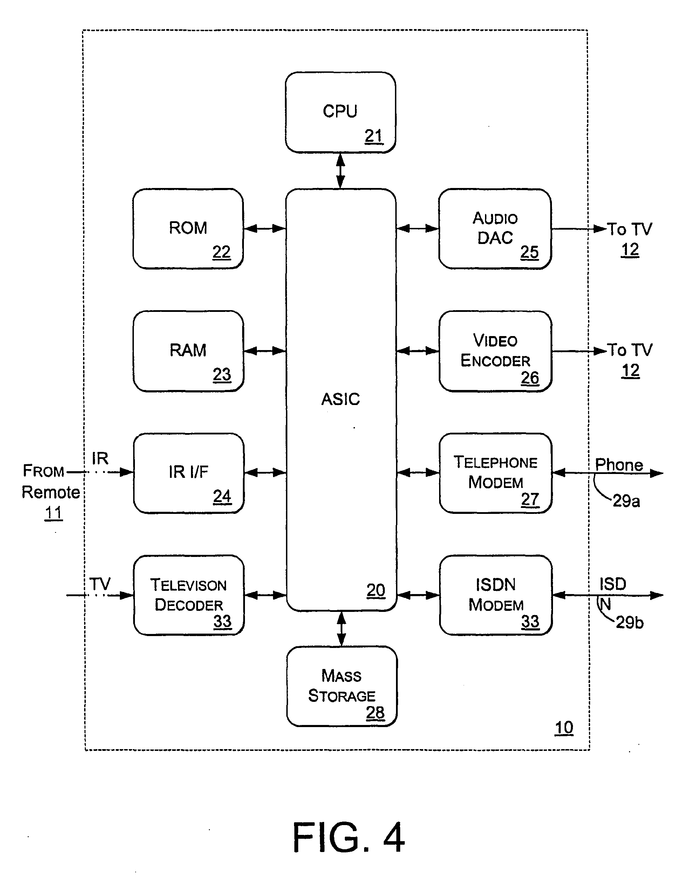

Fig. 4 shows the internal components of the set-top box 10. It has a central processing unit (CPU) 21 coupled to an Application-Specific Integrated Circuit (ASIC) 20. The CPU 21 executes software designed to implement features of the present invention and to control operation of the client 1. ASIC 20 contains circuitry to implement certain features provided by the client 1. ASIC 20 is coupled to an audio digital-to-analog converter (DAC) 25, which provides audio output to television 12. In addition, ASIC 20 is coupled to a video encoder 26, which provides video output to television set 12.

An IR interface 24 detects IR signals transmitted by remote control 11 and in response, provides corresponding electrical signals to ASIC 20. A standard telephone modem 27 and an ISDN modem 30 are coupled to ASIC 20 to provide connections 29a and 29b, respectively, to the modem pool 2 and, via the Internet 3, to the remote servers 4. Note that the set-top box 10 also may include a cable television modem (not shown).

STB 10 also includes a television decoder 33 to decode television signals received from either cable television or antenna sources. The television decoder 33 provides corresponding electrical signals to ASIC 20, thereby allowing video data carried in the broadcast video signal 8 to be presented to the viewer on the TV 12. In an alternative implementation, the STB 10 includes two television decoders to enable simultaneous reception and viewing of more than one television program at one time.

ASIC 20 is also coupled to a Read Only Memory (ROM) 22 and a Random Access Memory (RAM) 23. ROM 22 stores program code for implementing the application software to be executed by the set-top box 10. ROM 22 may be a programmable ROM (PROM) or any form of erasable PROM (EPROM) or Flash memory. A mass storage device 28 may optionally be provided and coupled to ASIC 20. The mass storage device 28 may be used to input software or data to the client or to download software of data received over network connection 29. The mass storage device 28 includes any suitable medium for storing machine-executable instructions, such as magnetic disks, optical disks, and the like.

### Application Software

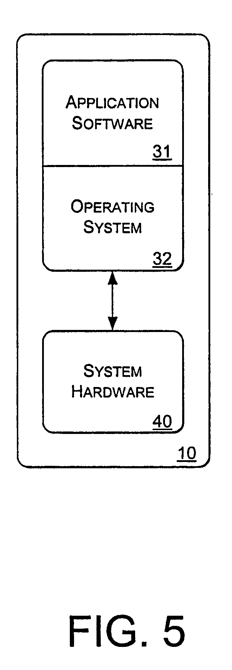

The STB 10 includes application software including a Web browser. As shown in Fig. 5, the application software 31 operates in conjunction with operating system (OS) software 32. The OS software 32 includes various device drivers and otherwise provides an interface between the application software 31 and the system hardware components 40 (i.e., the elements illustrated in Fig. 4).

In one implementation, the application software 31 and OS software 32 are stored in ROM 22. It will be recognized, however, that either or both of application software 31 and OS software 32 can be stored on any suitable storage medium, including magnetic or optical storage devices.

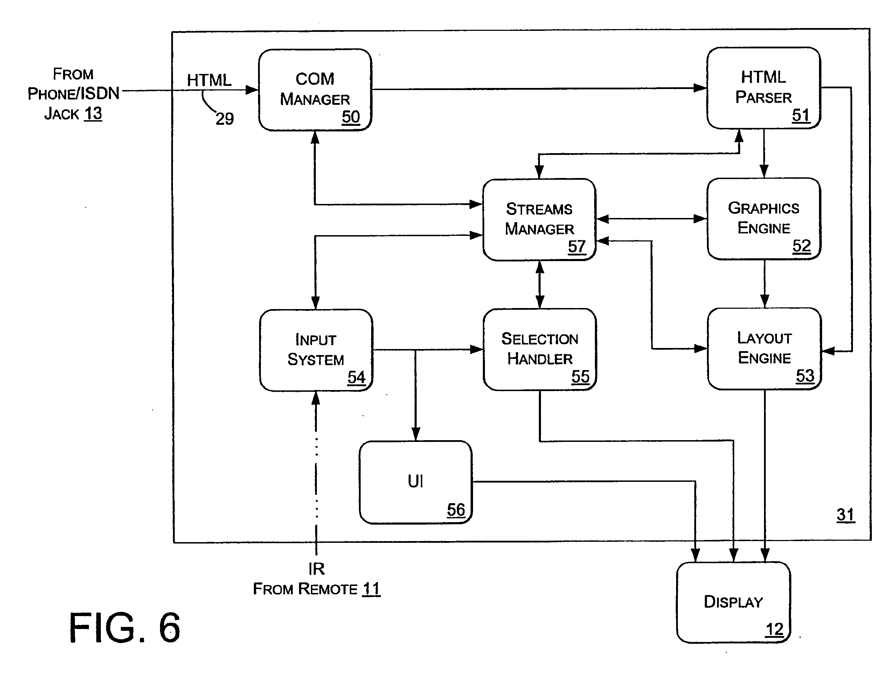

The Web browser functions of the present invention are implemented by application software 31. Fig. 6 illustrates the functional relationships between the various components of application software 31. Application software 31 includes a communications manager 50, an HTML (Hypertext Mark-up Language) parser 51, a graphics engine 52, a layout engine 53, an input system 54, a user interface 56, a selection handler 55, and a streams manager 57. The client system receives Web pages over network connection 29 in the form of HTML documents. Streams manager 57 controls and coordinates movement of data throughout the system.

Each HTML document is initially input to communications manager 50. Communications manager 50 performs functions to receive an HTML document over the network connection 29 including handling high-level communications protocols, such as HTTP (Hypertext Transport Protocol), TCP/IP (Transmission Control Protocol/Internet Protocol), etc. The communications manager 50 provides a received HTML document to the HTML parser 51, which then converts the HTML document descriptions to a displayable format for the client system.

An HTML document may contain text and/or refer to images, and may also include one or more hypertext links that are displayable objects that provide access to another Web page. Image information, such as JPEG or GIF image information, are provided by HTML parser 51 to layout engine 53 via a graphics engine 52, which is responsible for measuring and drawing images.

In the course of browsing through a displayed Web page or between different Web pages, a user activates buttons on remote control 11, which, in response, transmits IR signals that are received by the set-top box 10. Input system 54 records these inputs and provides them to selection handler 55 and user interface 56. In addition, input system 54 can handle input queuing and processing of inputs from various other input devices, such as a standard or IR keyboard. Other aspects of the Web browser which are visible to the user are provided by user interface 56 based on signals received from input system 54.

### Television Program Control

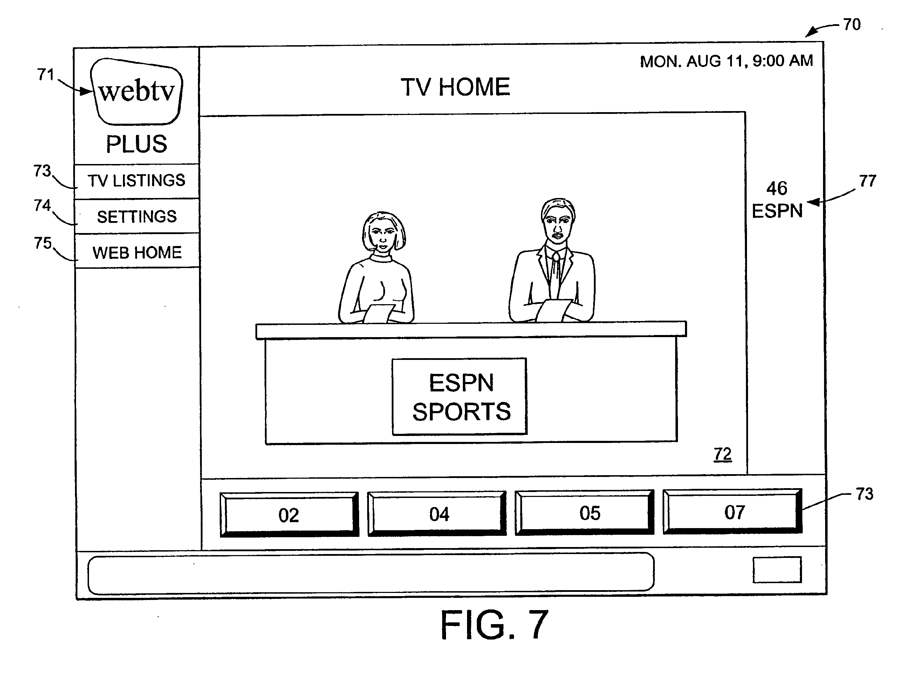

Fig. 7 shows a Television Home page 70 of the Internet network service. The TV Home page may be accessed and displayed by depressing the "Home" button 35 on the remote control 11 or by accessing the appropriate hypertext link on another Web page.

The TV Home page 70 includes the logo 71 (e.g., WebTV Plus), a television display screen 72, and hypertext links 73-75. Hypertext link 73 is a link to the TV Listings page for the system. The TV Listings page provides a list of television programs available to be viewed at a particular time and on a particular station. Hypertext link 74 is a link to the Settings page for the system, which provides several options and controls that allow the user to control parameters related to the display of television programs and web pages on the television display. Hypertext link 75 is a link to the system Home page, which provides the main interface through which the various programs can be accessed.

Television programs broadcast through the system are displayed in display screen 72. The channel number and station call identifier for the channel being received is displayed in display field 77. A user accesses television channels in the system similarly to the manner in which television channels are accessed on a normal television set. Channel up/down buttons 39 on remote control 11 allow a user to change channels up or down. Favorite or frequently viewed stations can be programmed into the system, and channel numbers corresponding to these stations may be displayed in display field 73 for convenient selection by the user.

According to an aspect of this invention, a recent channel screen is available to present channels that were recently viewed by the user. The recent channel screen allows a user to access a recently reviewed channel without requiring the user to remember the channel number and re-select the channel through channel adjustment buttons. The recent channel screen is accessed by pressing the Recent button 37 on remote control 11 while in the TV Home page 70.

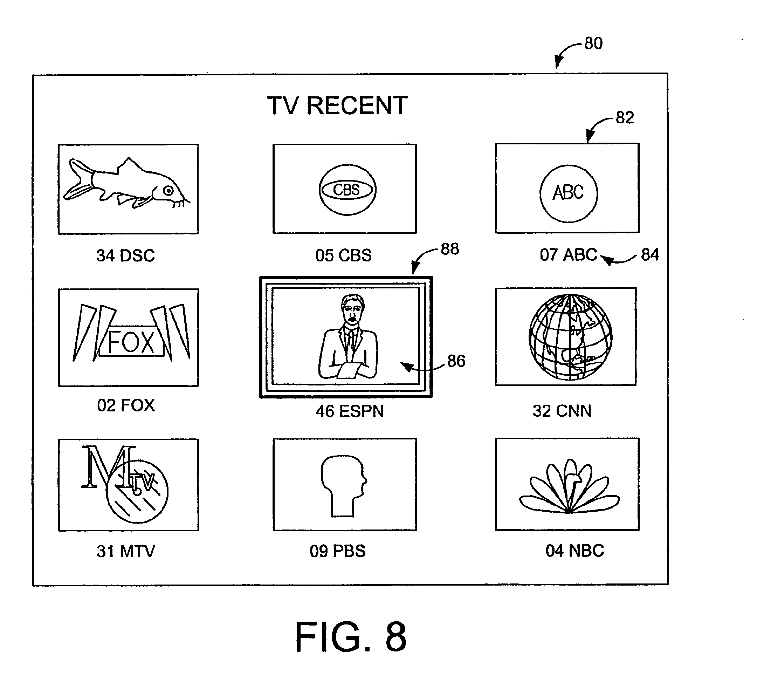

Fig. 8 shows one exemplary layout of the recent channel screen, which is referred to as the "TV Recent" screen 80. The TV Recent screen 80 includes a number of small display screens, such as display screen 82. There are nine small display screens 82 arrayed in a 3 x 3 arrangement in this layout. However, many other layouts are possible, with more or less small display screens and different arrangements.

Below each small display screen is the channel number and network call letters of the channel being displayed in the corresponding small display screen. A focus 88 indicates a presently selected one of the small display screens. In this example, the focus is implemented as a highlight box surrounding the small display screen. The small screen that is currently focused is referred to as the "active" or "currently viewed" screen 86. In other implementations, the focus may be a pointer, or a slight enlargement of the active screen, or other techniques for making one of the small screens stand out in comparison to the other small screens.

The active display screen 86 contains a live broadcast picture. In Fig. 8, the small display screen 86 corresponding to channel 46 contains a live picture. The other small display screens contain still images corresponding to the last image captured before the channel was de-selected.

Using the direction control buttons 15-18 on remote control unit 11, the user can move the highlight box 88 from one small display screen to another. As the highlight box 88 surrounds a particular display screen, that display screen becomes active, and the previously highlighted screen becomes de-selected and shows the last image captured on that channel. Once a small screen becomes active 86, the user can change the channels displayed within the active small screen using the channel up/down buttons 39 on the remote control 11.

According to another aspect, the user can display the currently highlighted channel as a full-screen image. The user selects the Enter (or Go) button 19 on remote control 11, which causes the television screen for the currently selected channel to be displayed in display area 72 in the TV Home page 70 (Fig. 7).

In an alternate implementation, the non-current display screens contain live pictures or still pictures which are occasionally updated to reflect current content. This alternative embodiment requires two television decoders, such as the television decoder 33 in the STB 10. One television decoder provides the live picture for the current channel, and the other television decoder provides the picture signal for the other channel display screens. A scanning system automatically scans and grabs signals for each of the channels in the TV Recent display screen. Depending on the scan rate of the scanning system the other channel display screens could be updated continuously, so that they each appear to display a live signal; or they could be updated semi-continuously so that their still images are periodically updated. This allows a user to see updated content for the other channels which is more recent than when the channel was originally de-selected, without disrupting television reception on the active channel.

According to another aspect, the user can cause all of the small display screens to be updated using the single television decoder. When in the TV Recent page 80, the user can press the "Recent" button 37 on the remote control 11 a second time to update the still images on all of the small display screens. Depressing the "Recent" button 37 causes the STB 10 to scan all channels listed in the recent channel list and to capture a more recent image of the de-selected or inactive channels. This update causes a brief disruption in the video signal presented in the active display screen, but this is not considered unpleasant to the viewer since the viewer initiated the update.

The TV Recent screen 80 comprises images for television stations that are stored in a chronological database, referred to as the "recent channel list." The recent channel list stores a preset number of channels in the order in which they were most recently viewed by a user. In the example illustrated in Fig. 8, small display screens are provided for nine of the most recently viewed channels. These are stored in a recent channel list with nine entries corresponding to the current channel, and the most recently accessed eight channels. It will be appreciated, however, that any number of channels can be stored and displayed depending on the size of the display device and small display screens, and the available memory in the processing system.

A channel can be added to the recent channel list in one of several different ways. Directly accessing a channel by entering numbers on the television set or through a remote control unit will cause the channel to be added to the recent channel list. A second way of adding a channel to the recent channel list is by accessing a channel through the channel up/down buttons 39 on remote control 11 and then viewing or resting on that channel for a certain minimum amount of time (e.g., 20 seconds). A third way of adding a channel to the recent channel list is manipulating the channel in the active (i.e., focused) small screen. Once the user selects one of the small screens in the TV Recent page 80, the user can change the channel using the channel up/down buttons 39. The newly selected channel is added to the recent channel list without the user having to view or rest on that channel for the time minimum.

Since the user can change the channel being displayed in the currently active small screen, the user is free to set several of the small screens in the TV Recent page 80 to the same channel. For instance, in Fig. 8, the user could change the active screen 86 to the same channel shown in a neighboring inactive screen, such as "32 CNN".

### TV Recent Screen Authoring

The TV Home page and TV Recent page are created using standard HTML command structures. Various different page formats and sequences may be utilized to achieve the present invention. Each small display screen (e.g., display screen 82) displayed in the TV Recent screen 80 is defined as an HTML extension tag, referred to as a "TV tag". HTML tags have attributes that describe how a particular HTML object will behave. The TV tag attributes describe how an object will be displayed on the television screen.

According to an aspect of this invention, the TV tag includes several attributes used by a TV object defined within the system. One attribute specifies the television channel corresponding to an object defining a small display screen object. Other TV Tag attributes specify the width and height of the display screen. Additional attributes can be used to specify other parameters, such as the shape and rotation of the small display screen object, among other characteristics.

The TV object can be defined as either active or inactive. If the TV object is active, a live broadcast video signal and audio signal are displayed in the corresponding small display screen. If the TV object is inactive, a still or semi-continuous (periodically updated) image is displayed in the small display screen. Another TV tag attribute, referred to as the alternate_frame_to_display attribute, specifies whether live video signal is to be shown in the small display screen object, or whether an alternate frame is to be displayed. As stated above, the alternate frame may be a still image corresponding to the last image grabbed when the corresponding channel was de-selected.

Another object, referred to as the TV Recent object, uses the TV tags to generate the TV Recent screen 80. When the user selects the "Recent" button 37 on remote control 11, the TV Recent object generates an HTML page with the TV tags and corresponding channel numbers. The number of TV tags created corresponds to the number of channel entries stored in the channel recent list and the number of small display screens displayed on the TV Recent screen 80. In the example illustrated in Fig. 8, the nine small display screens correspond to nine TV tags, each displayed with their respective channel number and network call letters.

The highlight box 88 of the TV Recent display screen 80 is implemented as an object, such as a Javascript object or an object defined in C++ or other similar high-level language. The highlight object specifies a small display screen object as active when the highlight box 88 is moved over the corresponding small display screen (e.g., display screen 86). Conversely, moving the highlight box off of a display screen, causes the small display screen to become inactive, thereby causing the small display screen to display an alternate image (e.g., a still image).

### Recent Channel Display Operation

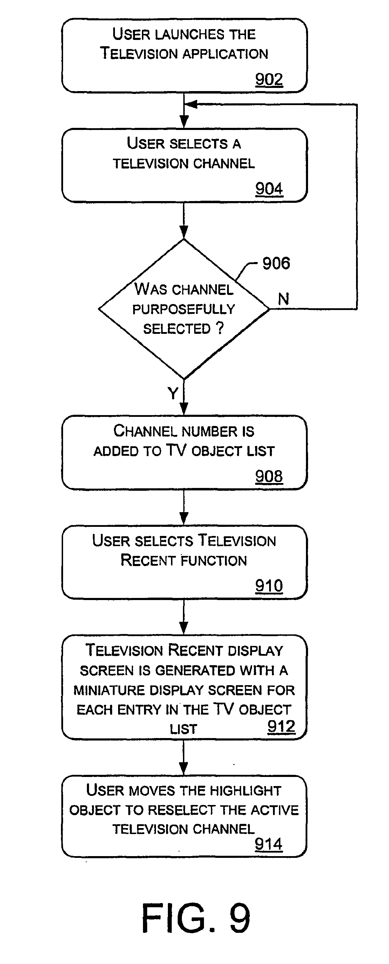

Fig. 9 is a flowchart showing steps in a method for displaying recently viewed television channels. In step 902, the user launches the television application in the client system. This is typically accomplished by selecting the appropriate option button or HTML link in the Home page. Upon selecting the television application, the TV Home page 70 is displayed on the television monitor. The user may then select a television channel to viewed (step 904). The television channel is typically selected using the television channel adjustment buttons 39 on remote control 11.

While watching television, a user may casually flip through channels sequentially or purposefully select a particular channel that he wishes to view. In step 906, it is determined whether a particular channel was purposefully selected as opposed to merely being selected for only a short period of time. A channel is assumed to be purposefully selected if it was directly input, viewed for more than a predetermined period of time (e.g., 20 seconds), or if it was selected in the active small display screen in the TV Recent page 80.

If it is determined that the channel was purposefully selected (i.e., the "yes" branch from step 906), the channel number is added to the recent channel list for the TV object (step 908). In one implementation, the recent channel list is a data structure within the TV object that stores the selected television channels in the order they were accessed. A predetermined number of channels (e.g., 9 channels) is stored in the recent channel list.

To view recently selected television channels, the user may select the television recent function by the depressing "Recent" button 37 on the remote control 11 (step 910). Upon selecting the television recent function, the TV Recent display screen 80 is generated (step 912). The TV Recent display screen 80 contains small display screens for each entry in the recent channel list. The display screen for the currently viewed channel displayed a live video image while the display screens for the other recently selected channels display still images. A highlight box surrounds the currently viewed channel. The highlight box can be moved among the small display screens change the active television channel (step 914). The user may then select the enter button 19 on the remote control 11 to display the selected television channel as a full screen on the TV Home page 70.

Once in the TV Recent page 80, the user can press the "Recent" button 37 on the remote control 11 a second time to update the still images on all of the small display screens. Depressing the "Recent" button 37 causes the STB 10 to scan all channels listed in the recent channel list and to capture a more recent image of the channels. This update causes a brief disruption in the video signal presented in the active display screen, but this is not considered unpleasant to the viewer since the viewer initiated the update.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

### SUMMARY OF ADVANTAGEOUS FEATURES

1. A method of displaying recently accessed television channels comprising the following steps:
   determining whether a television channel has been recently selected by a user;
   adding the television channel to a list of selected channels if the television channel was determined to be recently selected; and
   generating a primary display screen having multiple small display screens, each small display screen corresponding to one of the selected channels.
2. A method as recited in feature l, wherein the determining step comprises the step of monitoring whether the user selects a television channel according to a predetermined method.
3. A method as recited in feature 2, wherein the predetermined method comprises selecting the television channel for a predetermined length of time.
4. A method as recited in feature 2, wherein the predetermined method comprises selecting the television channel from within one of the small display screens.
5. A method as recited in feature 2, wherein the predetermined method comprises entering an identifier corresponding to the television channel directly into a device controlling a television tuner.
6. A method as recited in feature 1, further comprising the step of displaying the primary display screen on a television through a web browser program.
7. A method as recited in feature 1, wherein one of the small display screens is active and corresponds to a currently selected television channel, the active small display screen being differentiated from the remaining small display screens.
8. A method as recited in feature 7, further comprising the step of enlarging the active small display screen to full-screen mode, and removing the remaining small display screens.
9. A method as recited in feature 7, further comprising the step of applying a focus to the active small display screen.
10. A method as recited in feature 7, further comprising the following steps:
   generating a highlight box to enclose the active small display screen; and
   moving the highlight box from the active small display screen to a second small display screen to render active the second small display screen and to de-select the active small display screen.
11. A method as recited in feature 7, wherein the generating step comprises the step of depressing an option button on a control unit to initiate generation of the primary display screen.
12. A method as recited in feature 7, further comprising the step of ordering the selected channels within the list in an order in which the selected channels were selected.
13. A method as recited in feature 7, further comprising the following steps:
   displaying a live television signal from the television channel in the active small display screen;
   changing to a second television channel within the active small display screen; and
   displaying a live television broadcast signal from the second television channel in the active small display screen.
14. A method as recited in feature 7, further comprising the following steps;
   displaying a live television broadcast signal from the television channel in the active small display screen; and
   displaying a still image of a corresponding channel in the remaining small display screens.
15. A method as recited in feature 14, wherein the still image represents a last image captured on the corresponding channel when the channel was de-selected.
16. A method as recited in feature 14, further comprising the step of periodically updating the still image.
17. A method as recited in feature 1, further comprising the step of displaying still images captured from corresponding channels in at least one of the small display screens.
18. A method as recited in feature 17, further comprising the step of occasionally updating the still images in the small display screens.
19. A method as recited in feature 17, further comprising the step of updating the still images in the small display screens in response to activation of a button on a remote control unit.
20. A method comprising the following steps:
   generating a primary display screen having multiple small display screens, each small display screen corresponding to a recently selected channel; and
   applying a focus to one of the small display screens to designate the one small display screen as active and containing a currently selected television channel and to differentiate the active small display screen from remaining ones of the small display screens.
21. A method as recited in feature 20, further comprising the step of enlarging the active small display screen to full-screen mode and removing the remaining small display screens.
22. A method as recited in feature 20, further comprising the step of moving the focus from the active small display screen to a second small display screen to render active the second small display screen and to de-select the active small display screen.
23. A method as recited in feature 20, further comprising the following steps:
   displaying a live television broadcast signal from the television channel in the active small display screen; and
   displaying still images of corresponding channels in the remaining small display screens.
24. A method as recited in feature 23, further comprising the step of occasionally updating the still images in the small display screens.
25. A method as recited in feature 23, further comprising the step of updating the still images in the small display screens in response to activation of a button on a remote control unit.
26. A method comprising the following steps:
   generating a primary display screen having multiple small display screens, each small display screen corresponding to a recently selected channel; and
   displaying still images captured from corresponding channels in the small display screens.
27. A method as recited in feature 26, further comprising the step of updating the still images in the small display screens.
28. A method as recited in feature 26, further comprising the step of displaying a live television broadcast signal in at least one of the small display screens.
29. A client system capable of receiving multiple television channels comprising:
   a processor; and
   a memory coupled to the processor, the memory having stored therein executable instructions which, when executed by the processor, cause the processor to perform the following steps:
      determining whether a television channel has been recently selected by a user;
      adding the television channel to a list of selected channels if the television channel was determined to be recently selected; and
      generating a primary display screen having multiple small display screens, each small display screen corresponding to one of the selected channels.
30. A client system as recited in feature 29, wherein the primary display screen comprises a screen image displayed through an interactive display environment including World Wide Web content.
31. A client system as recited in feature 29, wherein the primary display screen is a Hypertext Mark-up Language (HTML) object.
32. An Internet system, comprising:
   at least one server system;
   one or more of the client systems as recited in feature 29; and
   a wide area network (WAN) interconnecting the server system and the one or more client systems.
33. A computer-readable medium having computer-executable instructions for performing the following steps:
   determining whether a television channel has been recently selected by a user;
   adding the television channel to a list of selected channels if the television channel was determined to be recently selected; and
   generating a primary display screen having multiple small display screens, each small display screen corresponding to one of the selected channels.
34. A computer-readable medium having computer-executable instructions for performing the following steps:
   generating a primary display screen having multiple small display screens, each small display screen corresponding to a recently selected channel; and
   applying a focus to an active small display screen to designate the active small display screen as containing a currently selected television channel and to differentiate the active small display screen from remaining ones of the small display screens.
35. A computer-readable medium having computer-executable instructions for performing the following steps:
   generating a primary display screen having multiple small display screens, each small display screen corresponding to a recently selected channel; and
   displaying still images captured from corresponding channels in the small display screens.
36. In a set-top box capable of receiving and presenting both television and Web content on a television, a user interface executing on the set-top box system comprising a primary display screen having multiple small display screens, each small display screen corresponding to a channel recently selected by a user, the user interface also having a movable focus to designate one of the small display screens from remaining ones of the small display screens.

## Claims

1. A method of displaying recently accessed television channels comprising the following steps:
determining whether a television channel has been purposefully selected by a user;
generating a primary display screen having multiple small display screens, each said small display screen corresponding to a respective said television channel that was purposefully selected by the user; and
displaying the primary display screen such that a plurality of said small display screens display still images obtained from respective said television channels; and
upon receipt of a user input, updating the still images of the plurality of said small display screens.

2. A method as recited in claim 1, wherein the determining includes monitoring whether the user selects a television channel according to a predetermined method.

3. A method as recited in claim 2, wherein the predetermined method includes selecting the television channel for a predetermined length of time.

4. A method as recited in claim 2, wherein the predetermined method includes selecting the television channel from within one of the small display screens.

5. A method as recited in claim 2, wherein the predetermined method includes entering an identifier corresponding to the television channel directly into a device controlling a television tuner.

6. A method as recited in claim 1, further comprising adding the television channel to a chronologic list of selected channels if the television channel was determined to be one of the number of most recently selected channels.

7. A method as recited in claim 1, wherein one of the small display screens is active and corresponds to a currently selected television channel, the active small display screen being differentiated from the remaining small display screens.

8. A method as recited in claim 7, further comprising enlarging the active small display screen to full-screen mode, and removing the remaining small display screens.

9. A method as recited in claim 7, further comprising applying a focus to the active small display screen.

10. A method as recited in claim 7, further comprising:
generating a highlight box to enclose the active small display screen; and
moving the highlight box from the active small display screen to a second small display screen to render active the second small display screen and to de-select the active small display screen.

11. A method as recited in claim 1, wherein the generating includes depressing an option button on a control unit to initiate generation of the primary display screen.

12. A method as recited in claim 7, further comprising ordering the selected channels within the list in an order in which the selected channels were selected.

13. A method as recited in claim 7, further comprising:
displaying a live television signal from the television channel in the active small display screen;
changing to a second television channel within the active small display screen; and
displaying a live television broadcast signal from the second television channel in the active small display screen.

14. A method as recited in claim 1, wherein one or more said still images represent a last image captured on a corresponding channel when the channel was de-selected.

15. A method of displaying recently accessed television channels comprising the following steps:
determining whether a television channel has been recently selected by a user;
adding the television channel to a list of selected channels if the television channel was determined to be recently selected; and
generating a primary display screen having multiple small display screens, each small display screen corresponding to one of the selected channels.

16. A method as recited in claim 15, wherein the determining step comprises the step of monitoring whether the user selects a television channel according to a predetermined method.

17. A method as recited in claim 16, wherein the predetermined method comprises selecting the television channel for a predetermined length of time.

18. A method as recited in claim 16, wherein the predetermined method comprises selecting the television channel from within one of the small display screens.

19. A method as recited in claim 15, further comprising the step of displaying the primary display screen on a television through a web browser program.

20. A method as recited in claim 15, wherein one of the small display screens is active and corresponds to a currently selected television channel, the active small display screen being differentiated from the remaining small display screens.

21. A method as recited in claim 20, further comprising the step of enlarging the active small display screen to full-screen mode, and removing the remaining small display screens.

22. A method as recited in claim 20, further comprising the following steps;
displaying a live television broadcast signal from the television channel in the active small display screen; and
displaying a still image of a corresponding channel in the remaining small display screens.

23. A method as recited in claim 22, wherein the still image represents a last image captured on the corresponding channel when the channel was de-selected.

24. A method as recited in claim 22, further comprising the step of periodically updating the still image.

25. A method as recited in claim 15, further comprising the step of displaying still images captured from corresponding channels in at least one of the small display screens.

26. A client system capable of receiving multiple television channels, comprising:
a processor; and
a memory coupled to the processor, the memory having stored therein executable instructions which, when executed by the processor, cause the processor to perform the following steps:
determining whether a television channel has been purposefully selected by a user;
generating a primary display screen having multiple small display screens, each said small display screen corresponding to a respective said television channel that was purposefully selected by the user; and
displaying the primary display screen such that a plurality of said small display screens display still images obtained from respective said television channels; and
upon receipt of a user input, updating the still images of the plurality of said small display screens.

27. A client system as recited in claim 26, wherein the primary display screen comprises a screen image displayed through an interactive display environment including World Wide Web content.

28. A client system as recited in claim 26, wherein the primary display screen is a Hypertext Mark-up Language (HTML) object.

29. An Internet system, comprising:
at least one server system;
one or more of the client systems as recited in claim 26; and
a wide area network (WAN) interconnecting the server system and the one or more client systems.

30. A computer-readable medium having computer-executable instructions for performing the following steps:
determining whether a television channel has been purposefully selected by a user;
generating a primary display screen having multiple small display screens, each said small display screen corresponding to a respective said television channel that was purposefully selected by the user; and
displaying the primary display screen such that a plurality of said small display screens display still images obtained from respective said television channels; and
upon receipt of a user input, updating the still images of the plurality of said small display screens.
